Europäisches Patentamt

European Patent Office

Office européen des brevets

(19)

(11) Numéro de publication: **0 279 133**
**A1**

## DEMANDE DE BREVET EUROPEEN

(12)

(21) Numéro de dépôt: **87402908.5**

(22) Date de dépôt: **18.12.87**

(51) Int. Cl.⁴ **C04B 35/46** , **H01G 4/12** , **H01B 3/12**

---

Le titre de l'invention a été modifié (Directives relatives à l'examen pratiqué à l'OEB, A-III, 7.3)

(30) Priorité: **19.12.86 FR 8617884**

(43) Date de publication de la demande:
**24.08.88 Bulletin 88/34**

(84) Etats contractants désignés:
**DE GB IT**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Beauger, Alain**
**THOMSON-CSF SCPI 19, avenue de Messine**
**F-75008 Paris(FR)**
Inventeur: **Rossello, Alain**
**THOMSON-CSF SCPI 19, avenue de Messine**
**F-75008 Paris(FR)**
Inventeur: **Schneider, Claude**
**THOMSON-CSF SCPI 19, avenue de Messine**
**F-75008 Paris(FR)**

(74) Mandataire: **Guérin, Michel et al**
**THOMSON-CSF SCPI 19, avenue de Messine**
**F-75008 Paris(FR)**

---

(54) Compositions céramiques diélectriques à haute permittivité.

㊝ L'invention concerne des compositions céramiques diélectriques à haute permittivité constituées par une phase principale choisie dans le diagramme $PbTiO_3$ -$SrTiO_3$ et représentant entre 55 et 85 % en poids des compositions et par des adjuvants comprenant de 0 à 12 % en poids d'oxyde de bismuth $Bi_2O_3$, de 0 à 9 % en poids d'oxyde de titane $TiO_2$, de 3 à 8 % en poids de titanate de calcium et de 0 à 30 % en poids d'une phase fusible de formulation $Ba(Bi_{1-y}Pb_y)_4 Ti_4O_{15}$ et/ou $Ba_2(Bi_{1-y}Pb_y)_4Ti_5O_{18}$ ou y varie de 0 à 0,3, l'ensemble étant choisi pour faire 100 % en poids.

EP 0 279 133 A1

# COMPOSITIONS CERAMIQUES DIELECTRIQUES A HAUTE PERMITTIVITE

La présente invention concerne des compositions céramiquea à haute permittivité et plus particulièrement des compositions céramiques de classe Z5U utilisées comme matériau diélectrique pour des condensateurs céramiques du type disque ou du type multicouches.

Les céramiques diélectriques utilisées en haute tension doivent satisfaire aux exigences suivantes:
- forte constante diélectrique,
- faibles pertes diélectriques,
- grande stabilité de la constante diélectrique et des pertes sous champ alternatif ou continu,
- tension de claquage élevée.

Les matériaux possédant une transition ferroélectrique très marquée seront par conséquent rejetés car les constantes et les pertes diélectriques sont très sensibles au champ appliqué. Dans ces conditions, le titanate de baryum ne pourra être sélectionné. Par contre, des matériaux paraélectriques tels que le titanate de strontium présentent un intérêt certain.

Les compositions céramiques sont des matériaux frittant à des températures relativement élevées (de l'ordre de 1400°C). On cherche donc à réduire cette température de frittage car une diminution de la température de frittage de 100 à 200°C est un avantage considérable.

Il est connu d'abaisser les températures de frittage en ajoutant des fondants ou frittés de verre aux compositions céramiques à base de titanate de baryum. Toutefois, ces fondants ne présentent pas une bonne stabilité chimique et peuvent perturber les propriétés électriques du matériau.

Afin de satisfaire à ces exigences, l'invention propose une sélection de compositions céramiques parmi le diagramme PbTiO$_3$-SrTiO$_3$ et l'utilisation de phases bien définies permettant le frittage à des températures comprises entre 1130°C et 1250°C. Les adjuvants de frittage seront choisis parmi le diagramme BaO-PbO-Bi$_2$O$_3$-TiO$_2$, ce qui représente l'avantage de fritter les céramiques à basse température tout en gardant une stabilité chimique au matériau diélectrique.

L'intérêt de ces compositions céramiques réside dans le fait que les températures de frittage sont relativement basses (en général inférieures à 1120°C) comparativement aux compositions céramiques contenant des titanates de baryum, de strontium et de plomb, et surtout en ce qu'elles présentent de fortes rigidités diélectriques qui les rendent compatibles avec une utilisation en haute tension.

L'invention a donc pour objet une composition céramique délectrique à haute permittivité, caractérisée en ce qu'elle est constituée par une phase principale choisie dans le diagramme PbTiO$_3$-SrTiO$_3$ et représentant entre 55 t 85 % en poids de la composition et par des adjuvants comprenant de 0 à 12 % en poids d'oxyde de bismuth Bi$_2$O$_3$, de 0 à 9 % en poids d'oxyde de titane TiO$_2$, de 3 à 8 % en poids de titanate de calcium et de 0 à 30 % en poids d'une phase fusible de formulation Ba(Bi$_{1-y}$Pb$_y$)$_4$Ti$_4$O$_{-5}$ et/ou Ba$_2$(Bi$_{1-y}$Pb$_y$)$_4$Ti$_5$O$_{-8}$ où y varie de 0 à 0,3, l'ensemble étant choisi pour faire 100 % en poids.

L'invention sera mieux comprise à l'aide de la description qui va suivre donnée à titre non limitatif.

La composition céramique délectrique peut être constituée à partir d'un mélange de SrTiO$_3$ et de PbTiO$_3$.

La composition céramique diélectrique peut aussi être constituée par une phase principale choisie dans le diagramme PbTiO$_3$-SrTiO$_3$ et exprimée par la formule générale:

Sr$_{2-2x}$PbTi$_{4+x}$O$_{11-4x}$ dans laquelle x varie de 0 à +1

et par des adjuvants destinés à stabiliser la composition précédente et à assurer un frittage entre 1130°C et 1250°C. Ces derniers sont constitués de titanate de calcium, de titanate de baryum, d'oxyde de titane, d'oxyde de bismuth et éventuellement d'une phase fusible à basse température dont la composition est exprimée par la formule générale:

Ba(Bi$_{1-y}$Pb$_y$)$_4$Ti$_4$O$_{-5}$

et/ou Ba$_2$(Bi$_{1-y}$Pb$_y$)$_4$Ti$_5$O$_{-8}$ ou y varie de 0 à 0,3

Ainsi selon un mode de réalisation préférentielle. le diélectrique est donc constitué principalement de titanate de strontium SrTiO$_3$ à raison de 30 à 58 % en poids. de titanate de plomb à raison de 15 à 35 % en poids et d'adjuvants à raison de 10 à 40 % en poids.

Selon un autre mode de réalisation préférentielle. le diélectrique est donc constitué par une chamotte complexe de formule générale Sr$_{2-2x}$Pb Ti$_{4-x}$O$_{11-4x}$ (où x varie de 0 à +1). à raison de 55 à 80 % en poids et d'adjuvants à raison de 20 à 45 % en poids. La chamotte complexe est donc réalisée par mélange des éléments suivants : 28% à 50 % en poids de SrCO$_3$. 25 à 40 % en poids de TiO$_2$. 11 % à 30 % en poids de PbO. La synthèse thermique est effectuée à des températures comprises entre 1050°C et 1150°C. pendant deux heures en atmosphère oxydante

A cette chamotte complexe contenant Sr Pb et Ti on additionne les adjuvants nécessaires au frittage et

2

à la stabilité électrique.

La nature des adjuvants et leurs proportions respectives sont déterminées par la valeur de la constante diélectrique désirée et la température de frittage du matériau céramique.

La phase fusible à basse température est composée de la façon suivante.

Le carbonate de baryum $BaCO_3$, l'oxyde de bismuth $Bi_2O_3$, l'oxyde de titane $TiO_2$ et l'oxyde de plomb PbO sont mélangés dans le rapport suivant :

2Ba $CO_3$ : 1,6 $Bi_2O_3$ : 0,8 PbO : 5 $TiO_2$

ou dans le rapport :

1 $BaCO_3$ : 1,6 $Bi_2O_3$ : 0,8 PbO : 4 $TiO_2$

Le broyage est conduit dans un broyeur contenant 45 % en poids de billes de zircone, 10 % en poids d'eau désionisée et 45 % en poids des ingrédients cités. La barbotine est séchée et la poudre calcinée à des températures comprises entre 800°C et 1050°C, et plus particulièrement vers 850°C pendant 2 heures.

Les compositions diélectriques sont préparées suivant la méthode bien connue de l'homme de l'art par pesée et mélange des matières premières afin d'obtenir une mixture suffisamment homogène pour permettre une réaction complète des éléments entre eux lors du frittage.

La poudre est pressée sous forme de disques par l'intermédiaire d'un liant selon l'art connu et le frittage est conduit en atmosphère oxydante à des températures comprises entre 1130°C et 1250°C et plus plarticulièrement vers 1200°C.

Les exemples suivants ainsi que les tableaux correspondants placés en fin de description décrivent des compositions selon l'invention.

## EXEMPLE 1

On décrira en détail la préparation d'une composition particulière, étant entendu que les suivantes sont réalisées de manière identique.

On mélange dans des récipients en polyéthylène contenant 100 g de billes de zircone, 60 cm³ d'eau désionisée et une quantité de poudre variant entre 50 et 60 g et formée des ingrédients mentionnés dans le tableau 1. L'ensemble des constituants est mélangé pendant 2 heures. La barbotine obtenue, après incorporation d'un liant, est séchée et la poudre tamisée. Des disques d'épaisseur 1 mm et de diamètre 8,4 mm sont pressés. Le frittage est conduit dans un four en atmosphère oxydante à des températures comprises entre 1200°C et 1250°C.

Après dépôt d'électrodes en argent sur les deux faces, les condensateurs sont testés électriquement et les résultats sont résumés dans le tableau I.

Le tableau I regroupe sept compositions référencées de 1 à 7 et pour lesquelles le rapport SrO/PbO est égal à 2, ainsi que leurs caractéristiques physiques et électriques.

Les constituants des compositions sont indiqués selon leurs pourcentages en poids par rapport aux compositions globales. La phase fusible est $Ba_2(Bi_{0,8}Pb_{0,2})_4 Ti_5O_{18}$. Les caractéristiques mentionnées dans le tableau sont :
- la densité de la céramique d,
- la constante diélectrique ε mesurée à 20°C et à 1 kHz,
- la tangente de l'angle de pertes tgδ mesurée à 20°C et à 1 kHz,
- la température de Curie $T_c$,
- La variation relative de capacité ΔC exprimée en % pour les températures indiquées dans le tableau.

## EXEMPLE 2

On prépare dans les mêmes conditions que précédemment des mélanges, en ayant un rapport constant SrO PbO de 4.

Le tableau II regroupe sept compositions référencées 8 à 14, ainsi que leurs caractéristiques physiques et électriques. La phase fusible utilisée est la même que pour l'exemple 1.

## EXEMPLE 3

On effectue dans un premier temps un mélange des différents constituants : carbonate de strontium SrCO$_3$, oxyde de plomb PbO et oxyde de titane TiO$_2$, dans une jarre en porcelane. Le rapport SrO/PbO est égale à 2. Les proportions sont les suivantes: 390 g de SrCO$_3$ + PbO + TiO$_2$, 700 cm$^3$ d'eau désionisée, 800 g de billes de zircone. L'ensemble est mélangé pendant 15 heures. Après séchage, la poudre est chamottée entre 1000°C et 1150°C. Ensuite, après un broyage et un tamisage qui permet d'éliminer les agglomérats, la poudre ainsi obtenue est mélangée avec les adjuvants de frittage déjà mentionnés. La phase fusible consiste en Ba$_2$(Bi$_{0,8}$Pb$_{0,2}$)$_4$ Ti$_5$O$_{18}$. La barbotine après incorporation d'un liant est séchée et la poudre tamisée. Des disques d'épaisseur 1 mm et de diamètre 3,4 mm sont pressés.

Le frittage est conduit dans un four en atmosphère oxydante à des températures comprises entre 1200°C et 1250°C.

Après dépôt d'électrodes en argent sur les deux faces les condensateurs sont testés électriquement et les résultats sont mentionnés dans le tableau III qui regroupe trois compositions référencées 15 à 17. Dans ce tableau, on a distingué la composition de la chamotte de la composition du diélectrique.

On remarque que l'ajout de la phase fusible perturbe la courbe de variation de la capacité en fonction de la température ainsi que la valeur de la constante diélectrique.

## EXEMPLE 4

On prépare, dans les conditions décrites à l'exemple III, des mélanges possédant un rapport constant SrO/PbO égal à 4. La phase fusible est Ba$_2$(Bi$_{0,8}$Pb$_{0,2}$)$_4$ Ti$_5$O$_{18}$. Comme pour les exemples 1 à 3, la constante diélectrique et la tangente de l'angle de pertes sont mesurées à 20°C pour une fréquence de 1 kHz.

Le tableau IV regroupe trois compositions référencées 18 à 20. On constate qu'un excès de phase fusible provoque la diminution de la constante diélectrique.

|                     | 1       | 2       | 3       | 4       | 5       | 6       | 7        |
|---------------------|---------|---------|---------|---------|---------|---------|----------|
| $SrTiO_3$           | 39,88   | 40,17   | 38,25   | 36,505  | 34,92   | 33,47   | 32,133   |
| $PbTiO_3$           | 32,62   | 32,85   | 31,29   | 29,87   | 28,56   | 27,37   | 26,294   |
| $Bi_2O_3$           | 11,64   | 11,72   | 11,16   | 10,655  | 10,20   | 9,76    | 9,378    |
| $TiO_2$             | 8,46    | 8,54    | 8,12    | 7,76    | 7,415   | 7,10    | 6,82     |
| $CaTiO_3$           | 7,40    | 6,72    | 6,40    | 6,09    | 5,835   | 5,60    | 5,379    |
| phase fusible       | 0       | 0       | 4,78    | 9,12    | 13,07   | 16,70   | 19,996   |
| d                   | 5,4     | 5,2     | 5       | 5       | 4,8     | 4,60    | 4,50     |
| $\varepsilon$       | 4100    | 3560    | 3452    | 3765    | 3124    | 3047    | 2655     |
| $tg\,\delta \times 10^4$ | 140 | 136     | 122     | 143     | 136     | 107     | 125      |
| $T_C$               | 10°C    | 20°C    | 0°C     | 10°C    | 0°C     | 0°C     | -55°C    |
| $\Delta C + 10°C$   | -2      | -0,6    | +2,6    | +1,9    | +1,5    | +1,7    | +1,1     |
| $\Delta C + 85°C$   | -31,3   | -26,6   | -24,6   | -22     | -20     | -22     | -20,6    |

TABLEAU I

5

| | 8 | 9 | 10 | 11 | 12 | 13 | 14 |
|---|---|---|---|---|---|---|---|
| $SrTiO_3$ | 57,34 | 55,33 | 53,51 | 51,77 | 50,15 | 48,65 | 47,30 |
| $PbTiO_3$ | 23,44 | 22,63 | 21,87 | 21,17 | 20,51 | 19,896 | 18,90 |
| $Bi_2O_3$ | 8,36 | 8,08 | 7,80 | 7,56 | 7,32 | 7,10 | 0 |
| $TiO_2$ | 6,08 | 5,88 | 5,68 | 5,50 | 5,32 | 5,16 | 0 |
| $CaTiO_3$ | 4,78 | 4,62 | 4,46 | 4,32 | 4,18 | 4,06 | 3,80 |
| phase fusible | 0 | 3,46 | 6,68 | 9,68 | 12,52 | 15,134 | 30,00 |
| d | 5 | 5,2 | 5,2 | 5 | 4,9 | 4,9 | 5,5 |
| $\varepsilon$ | 2238 | 2465 | 2636 | 2484 | 2329 | 2205 | 2000 |
| $tg\delta \times 10^4$ | 25 | 32 | 41 | 41 | 42 | 35 | 28 |
| $T_c$ | -55°C | -55°C | -55°C | -55°C | -55°C | -55°C | -25°C |
| $\Delta C$ à +10°C | +7,4 | +6,6 | +5,6 | +5 | 4,8 | 4,8 | 4 |
| $\Delta C$ à +85°C | -39,4 | -36,8 | -35 | -33,6 | -32,5 | -31,5 | -29 |

TABLEAU II

|  | 15 | 16 | 17 |
|---|---|---|---|
| CHAMOTTE | | | |
| $SrCO_3$ | 35,23 | 35,23 | 35,23 |
| PbO | 26,63 | 26,63 | 26,63 |
| $TiO_2$ | 38,14 | 38,14 | 38,14 |
| DIELECTRIQUE | | | |
| $Sr_2PbTi_4O_{11}$ | 73,04 | 63,50 | 58,52 |
| $Bi_2O_3$ | 11,72 | 10,20 | 9,38 |
| $TiO_2$ | 8,52 | 7,42 | 6,82 |
| $CaTiO_3$ | 6,72 | 5,84 | 5,38 |
| phase fusible | 0 | 13,04 | 20 |
| d | 5,2 | 4,9 | 4,6 |
| $\varepsilon$ | 3516 | 2891 | 2360 |
| $tg\,\delta \times 10^4$ | 170 | 140 | 50 |
| $T_c$ | +10°C | 0°C | 0°C |
| $\Delta C$ à +10°C | +0,3 | +3,2 | +3,2 |
| $\Delta C$ à +85°C | -30,9 | -29 | -25,6 |

TABLEAU III

| | 18 | 19 | 20 |
|---|---|---|---|
| CHAMOTTE | | | |
| $SrCO_3$ | 48,67 | 48,67 | 48,67 |
| PbO | 18,40 | 18,40 | 18,40 |
| $TiO_2$ | 32,93 | 32,93 | 32,93 |
| DIELECTRIQUE | | | |
| $Sr_4PbTi_5O_{15}$ | 77,095 | 70,26 | 64,50 |
| $Bi_2O_3$ | 7,978 | 7,28 | 6,86 |
| $TiO_2$ | 5,803 | 5,28 | 4,86 |
| $CaTiO_3$ | 4,562 | 4,14 | 3,82 |
| phase fusible | 4,562 | 13,04 | 19,96 |
| d | 5,2 | 5,3 | 5,2 |
| $\varepsilon$ | 2460 | 2488 | 2180 |
| $tg\,\delta \times 10^4$ | 30 | 30 | 20 |
| $T_c$ | -55 | -55 | -55 |
| $\Delta C$ à +10°C | +8,2 | +5,4 | +4,6 |
| $\Delta C$ à +85°C | -38,5 | -30,2 | -26,4 |

TABLEAU IV

## Revendications

1. Composition céramique diélectrique à haute permittivité, caractérisée en ce qu'elle est constituée par une phase principale choisie dans le diagramme $PbTiO_3$ -$SrTiO_3$ et représentant entre 55 et 85 % en poids de la composition et par des adjuvants comprenant de 0 à 12 % en poids d'oxyde de bismuth $Bi_2O_3$, de 0 à 9 % en poids d'oxyde de titane $TiO_2$, de 3 à 8 % en poids de titanate de calcium et de 0 à 30 % en poids d'une phase fusible de formulation $Ba(Bi_{1-y}Pb_y)_4 Ti_4O_5$ et ou $Ba_2(Bi_{1-y}Pb_y)_4 Ti_5O_3$ où y varie de 0 à 0.3, l'ensemble étant choisi pour faire 100 % en poids.

2. Composition céramique selon la revendication 1, caractérisée en ce que ladite phase principale est constituée de titanate de strontium $SrTiO_3$ et de titanate de plomb $PbTiO_3$, le rapport $SrO.PbO$ étant égal à 2.

3. Composition céramique selon la revendication 1, caractérisée en ce que ladite phase principale est constituée de titanate de strontium $SrTiO_3$ et de titanate de plomb $PbTiO_3$, le rapport $SrO.PbO$ étant égal à 4.

4. Composition céramique selon la revendication 1 caractérisée en ce que ladite phase principale est constituée d'une chamotte de formulation
$Sr_{2+2x}PbTi_{4+x}O_{11+4x}$ avec $0 \leq x \leq 1$.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 400 113 (TAIYO YUDEN K.K.) * Revendications 1,9-15 * | 1-3 | C 04 B 35/46 H 01 G 4/12 H 01 B 3/12 |
| A | | 4 | |
| A | DE-A-3 426 038 (MURATA MANUFACTURING CO.) * Revendication unique * | 1-4 | |
| A | CHEMICAL ABSTRACTS, vol. 105, no. 18, 3 novembre 1986, résumé no. 163126w, Columbus, Ohio, US; L.V. KORZUNOVA et al.: "Study of $Pb_{1-x}Ba_xBi_4Ti_4O_{15}$ solid solutions", & NEORG. STEKLA, POKRYTIYA MATER. 1986, 7, 147-51 | 1 | |

**DOMAINES TECHNIQUES RECHERCHES (Int. Cl.4)**

C 04 B
H 01 G
H 01 B

Le présent rapport a été établi pour toutes les revendications

| Lieu de la recherche | Date d'achèvement de la recherche | Examinateur |
|---|---|---|
| LA HAYE | 05-04-1988 | SCHURMANS H.D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant